# EUROPÄISCHE PATENTSCHRIFT

(11) **EP 2 498 160 B1**
(45) Veröffentlichungstag und Bekanntmachung des Hinweises auf die Patenterteilung: **18.04.2018**
(21) Anmeldenummer: 11008684.0
(22) Anmeldetag: 29.10.2011
(51) Int. Cl.: G05D 3/00

(54) **Vorrichtung zum Bewegen eines mechanischen Elements sowie Verfahren zum Bauen von Kraftfahrzeugen mit unterschiedlicher Art von Steuerung von Aktorenvorrichtungen**
Device for moving a mechanical element and method for constructing motor vehicles with different types of control for actuator devices
Dispositif de déplacement d'un élément mécanique et procédé de construction de véhicules automobiles ayant une commande de type différent de dispositifs d'actionneurs

(30) Priorität: 10.12.2010 DE 102010054095
(43) Veröffentlichungstag der Anmeldung: 12.09.2012
(73) Patentinhaber: Audi AG, 85045 Ingolstadt (DE)
(72) Erfinder: Cabrerizo, Dominik, 90542 Eckental (DE)
(74) Vertreter: Patzelt, Heike Anna Maria

(56) Entgegenhaltungen:
- EP-A1- 2 227 949
- US-A1- 2009 108 793
- FORNOFF ET AL: "Elektronische Getriebesteuerung EGS 1", 1. März 2004 (2004-03-01), ELEKTRONISCHE GETRIEBESTEUERUNG EGS 1. AUSGABE 2004, BOSCH GMBH, PLOCHINGEN; DE, PAGE(S) 1 - 112, XP007908342, ISBN: 978-3-7782-2027-6 * Seite 94 - Seite 98 *

## Beschreibung

Die Erfindung betrifft eine auch als Aktor bezeichenbare Vorrichtung zum Bewegen eines mechanischen Elements, die einen Eingang zum Empfangen von Signalen aufweist und ferner eine Steuerung aufweist, die die empfangenen Signale ausliest und eine Bewegung des mechanischen Elements in Abhängigkeit von dem ausgelesenen Signal bewirkt. Die Erfindung betrifft auch ein Verfahren zum Bauen von Kraftfahrzeugen mit Aktorenvorrichtungen.

Herkömmlicherweise arbeiten solche Aktoren mit digitalen Signalen, die empfangenen Signale werden also dahingehend ausgewertet, ob sie eine logische Null übermitteln oder eine logische Eins übermitteln. Die logische Null entspricht hierbei einer ersten Stellung des mechanischen Elements und die logische Eins einer zweiten Stellung des mechanischen Elements. Es erfolgt gegebenenfalls eine Bewegung von der einen Stellung in die andere Stellung.

Bei einer digitalen Ansteuerung sind Zwischenstellungen nicht vorgesehen.

Es ist jedoch hilfreich, wenn solche Zwischenstellungen ebenfalls eingenommen werden können. Aus der DE 10 2004 048 706 A1 ist es bekannt, ein pulsbreitenmoduliertes Signal (PWM-Signal) zur Ansteuerung zu verwenden. Die Pulsbreitenmodulation beinhaltet, dass innerhalb einer Periode für eine bestimmte Zeit ein Signal mit der logischen Eins abgegeben wird und für eine bestimmte Zeit ein Signal mit der logischen Null abgegeben wird.

Das Verhältnis zwischen diesen beiden Zeiten ergibt einen Zahlenwert, der gemäß einer Abbildungsvorschrift einer Stellung des mechanischen Elements zugeordnet ist, wobei bestimmten Zahlenwerten auch Zwischenstellungen zugeordnet sind.

Der Aktor, der mit PWM-Signalen betrieben wird, lässt sich jedoch nicht in ein Kraftfahrzeug einbauen, in dem die Ansteuerung der Aktoren digital erfolgt.

Aus der EP 2 227 949 A1 ist ein Verfahren zum Betrieb einer agraren Ausbringungseinrichtung für das Ausbringen von Fluiden wie Pflanzenschutzmitteln oder Dünger in der Landwirtschaft bekannt. Die Steuerung des Ausbringens des Fluids erfolgt dabei über ein pulsmoduliertes Ventil, welches jeweils kalibriert ist und beim Betrieb entsprechend dem Ergebnis der Kalibrierung angesteuert wird. Das pulsmodulierte Ventil ist dabei geeignet ausgebildet und ansteuerbar, um eine Pulsweitenmodulation, eine Pulsbreitenmodulation oder ein Pulsdauermodulation zu ermöglichen und ist insbesondere als Elektromagnetventil ausgebildet, welches mit einer festen oder variablen Frequenz angesteuert wird.

Aus der US 2009/0108793 A1 ist eine Methode zum Betreiben eines Aktuators, welcher einen Motor umfasst und an ein zu bewegendes Element gekoppelt ist, bekannt. Mittels des zu bewegenden Elements kann dabei beispielsweise ein Gerät wie eine Turbine mit variabler Geometrie oder ein Abgasrückführventil beeinflusst bzw. gesteuert werden. Es ist vorgesehen, dass der mögliche Bewegungsumfang des zu bewegenden Elements mechanisch durch zwei Stoppelemente begrenzt ist und ein Steuergerät das zu bewegende Element derart an diese Begrenzungen heranführen kann, dass auf die Begrenzungen eine Haltekraft ausgeübt wird oder nicht.

Aus einem Fachbuch von Fornoff et al. ("Elektronische Getriebesteuerung EGS 1") sind mittels eines Pulsmodulationsverfahrens ansteuerbare Ventile bekannt, wobei beispielsweise mittels des variablen Tastverhältnisses der Arbeitsdruck gesteuert bzw. variiert werden kann. Solche Ventile können beispielsweise in bzw. mit entsprechenden Aktuatoren in einer hydraulischen Getriebesteuerung eines Kraftfahrzeugs eingesetzt werden.

Es ist Aufgabe der Erfindung, für eine größere Flexibilität beim Bauen eines Kraftfahrzeugs zu sorgen. Die Aufgabe wird in einem Aspekt durch eine Vorrichtung zum Bewegen eines mechanischen Elements (einen Aktor) gemäß Patentanspruch 1 gelöst, und in einem anderen Aspekt durch ein Verfahren zum Bauen von Kraftfahrzeugen mit unterschiedlichen Arten von Steuerung der Aktorenvorrichtungen des Kraftfahrzeugs gemäß Patentanspruch 3 gelöst.

Bei der erfindungsgemäßen Vorrichtung ist somit die Steuereinrichtung dazu ausgelegt, in einem ersten Modus empfangene Signale hinsichtlich einer digitalen Information auszuwerten und in Abhängigkeit von einem empfangenen Signal das Einnehmen einer von zwei Endstellungen des mechanischen Elements zu bewirken. In einem zweiten Modus werden empfangene Signale als auf einer vorbestimmten Frequenz pulsbreitenmoduliert ausgewertet, und in Abhängigkeit von einem empfangenen Signal wird das Einnehmen einer Stellung aus einer Mehrzahl von Stellungen bewirkt, die die beiden Endstellungen umfassen und von denen zumindest eine Stellung eine Zwischenstellung zwischen den beiden Endstellungen ist; die eingenommene Stellung wird somit durch das pulsbreitenmodulierte Signal vorgegeben, in der an sich bekannten Weise.

Der erste und der zweite Modus unterscheiden sich darin, dass in dem ersten Modus als Signal zum Einnehmen der Endstellung interpretierte Signale im zweiten Modus als Fehlersignale interpretiert werden können. Es wird somit möglich, zwei Modi auszuwählen, die an sich miteinander gar nicht kompatibel wären. Insbesondere in Verbindung mit der Eigenschaft, dass der Modus gewechselt werden kann, ist dies bei der vorliegenden Erfindung ermöglicht.

Die erfindungsgemäße Vorrichtung ist somit in zwei Umgebungen einsetzbar, sodass erst zu einem späteren Zeitpunkt, insbesondere beim Einbau in ein Kraftfahrzeug, entschieden werden muss, welcher Modus bei laufendem Betrieb der richtige ist.

Bevorzugt ist die Steuereinrichtung dazu ausgelegt, von einem jeweiligen Modus beim Empfang eines Signals jeweils vorbestimmter Art in den anderen Modus zu wechseln (wobei das Signal vorbestimmter Art nicht als eine Stellung anzeigend ausgewertet wird, sondern durch irgendeine Eigenheit als Signal zum Wechseln des Modus erkennbar ist).

Das erfindungsgemäße Verfahren ist dadurch gekennzeichnet, dass in die Kraftfahrzeuge eine Aktorenvorrichtung eingebaut wird, die sowohl über digital interpretierbare Signale als auch über pulsbreitenmodulierte Signale ansteuerbar ist, und wobei die Aktorenvorrichtung bei Ansteuerung gemäß einer dieser beiden Arten selbige Art erkennt, um die Signale zu interpretieren. Das Erkennen kann anhand bestimmter vorausgehender Signale oder auch der Steuersignale selbst erfolgen. Dadurch, dass die Aktorenvorrichtung, die bevorzugt die erfindungsgemäße Aktorenvorrichtung ist, selbsttätig erkennt, in welchem Modus sie zu betreiben ist, müssen beim Einbau keine weiteren Vorkehrungen getroffen werden. Ein und dieselbe Aktorenvorrichtung kann sowohl in solchen Kraftfahrzeugen verwendet werden, in denen die Steuersignale digital abgegeben werden, als auch genauso in solchen Kraftfahrzeugen, in denen zur Erzielung von Zwischenstellungen des mechanischen Elements eine Ansteuerung vermittels PWM-Signalen erfolgt.

Nachfolgend wird eine bevorzugte Ausführungsform der Erfindung unter Bezug auf die Zeichnung näher beschrieben, in der
- Fig. 1: schematisch eine Vorrichtung veranschaulicht, bei der die Erfindung einsetzbar ist;
- Fig. 2: einen Signalverlauf über die Zeit zur Erläuterung des Konzepts der Pulsbreitenmodulation wiedergibt;
- Fig. 3: ein Flussschaubild zur Erläuterung der Arbeitsweise der Vorrichtung gemäß Fig. 1 ist;
- Fig. 4: eine Einteilung wiedergibt, die in einem ersten Modus der Vorrichtung aus Fig. 1 verwendet wird; und
- Fig. 5: eine Einteilung wiedergibt, die in einem zweiten Modus der Vorrichtung gemäß Fig. 1 verwendet wird.

Ein im Ganzen mit 10 bezeichneter Aktor bewegt ein mechanisches Element 12, das vorliegend als Stößel dargestellt ist, wobei zum Stößel zwei Endstellungen s₁, s₂ dargestellt sind. Zwischen diesen Endstellungen gibt es Zwischenstellungen, die ebenfalls eingenommen werden können. Über eine Schnittstelle 14 werden dem Aktor 10 Signale zugeführt, diese werden von einer Steuereinrichtung 16 ausgewertet, die dann einen Motor 18 ansteuert, der die Bewegung des mechanischen Elements 12 bewirkt.

Die Erfindung ist genauso anwendbar bei allen anderen Aktoren, bei denen ein mechanisches Element in irgendeiner Form bewegt wird. Es kann sich insbesondere neben einer translatorischen Bewegung auch alternativ oder zusätzlich um eine rotatorische Bewegung handeln. Das mechanische Element kann auch ein Ventil sein, das Zwischenstellungen zwischen "ganz offen" und "ganz geschlossen" einnehmen kann.

Die Steuereinrichtung 16 umfasst vorliegend einen Taktgeber 20, sodass über eine Periodendauer T kleinere Zeiteinheiten messbar sind.

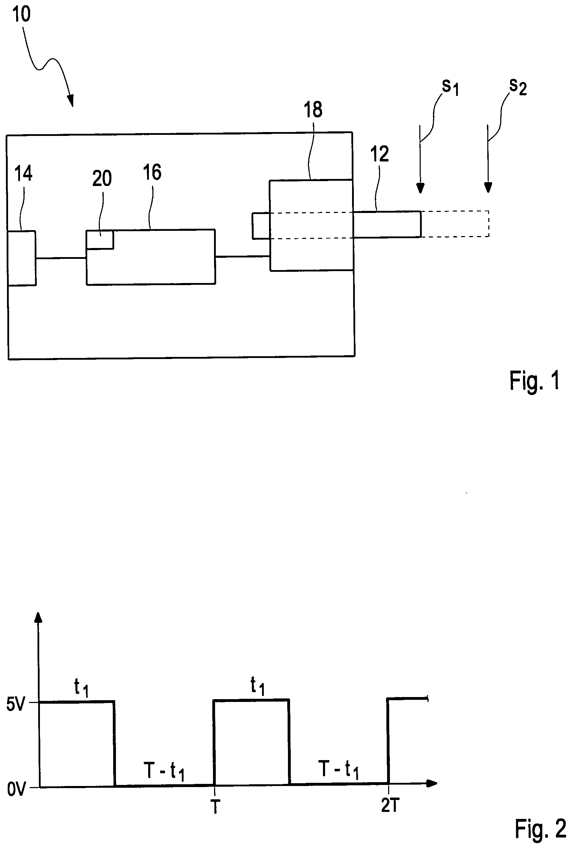

Über die Schnittstelle 14 können Signale von 0V und 5V zugeführt werden ("Low" und "High"). Im Beispiel von Fig. 2 ist dargestellt, dass während einer Periodendauer T für eine Zeitdauer t₁ der logisch hohe Zustand eingenommen wird, und dann für die restliche Zeitdauer T-t₁ der logisch niedrige Zustand eingenommen wird.

Vorliegend ist davon ausgegangen, dass man die Zeitdauern t₁ und T-t₁ ins Verhältnis zueinander setzen kann oder die Größe t₁ auf die Periodendauer T beziehen kann.

Vorliegend ist davon ausgegangen, dass die Größe t₁/T eine Information darüber gibt, welche Stellung eingenommen wird.

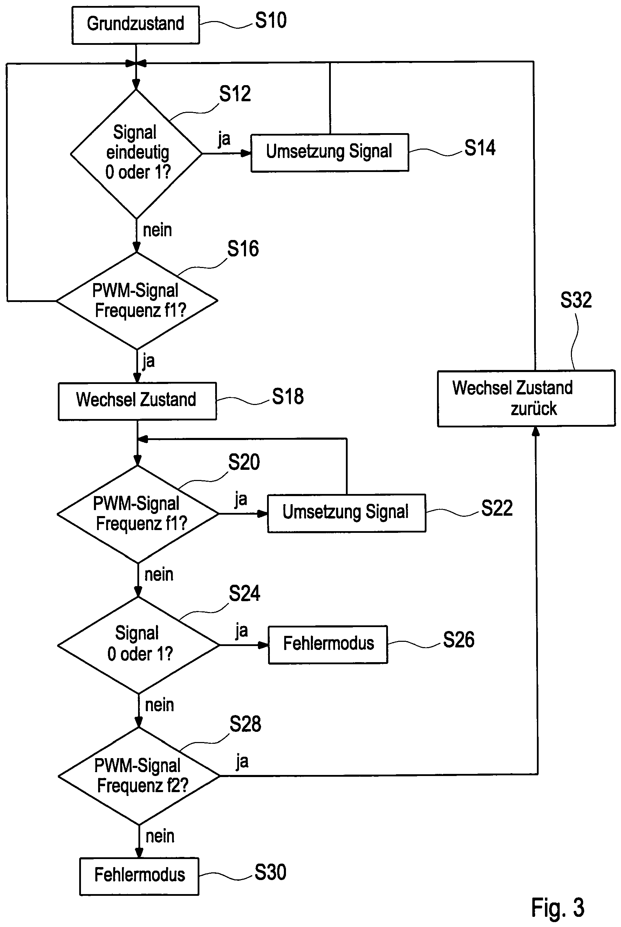

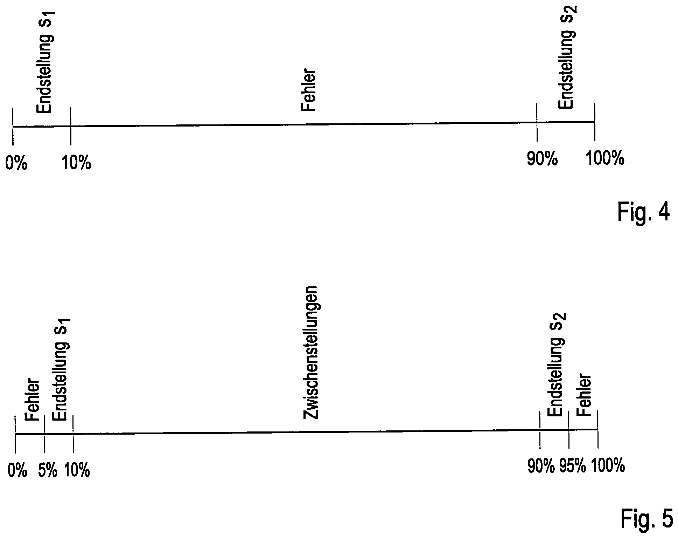

In einem gemäß Schritt S10 eingenommenen Grundzustand des Aktors 10 ist dieser, genauer gesagt, seine Steuereinrichtung 16, so eingerichtet, dass mit digitalen Signalen gerechnet wird. In Schritt S12 wird ein Signal empfangen und geprüft, ob dies mehr oder weniger eindeutig eine Null oder eine Eins ist. Hierbei gilt die Einteilung gemäß Fig. 4: Beträgt das Verhältnis t₁/T zwischen 0% und 10%, so wird die Endstellung s₁ eingenommen (oder bleibt eingenommen). Beträgt das Verhältnis t₁/T zwischen 90% und 100%, so wird die Endstellung s₂ eingenommen (oder bleibt eingenommen). Für Zwischenwerte wird zunächst ein Fehler angenommen. Ist das Signal aber eindeutig eine Null oder eine Eins, so wird das Signal gemäß S14 umgesetzt, also durch die Steuereinrichtung 16 der Motor 18 entsprechend angesteuert (oder nicht, um den bereits bestehenden Zustand aufrecht zu erhalten). Dann wird beim nächsten Erhalt eines Signals abermals der Schritt S12 durchgeführt. Sobald das Signal nicht mehr eindeutig Null oder Eins ist, also in den Bereich zwischen 10% und 90% gemäß Fig. 4 fällt, wird in Schritt S16 geprüft, ob es sich um ein pulsbreitenmoduliertes Signal mit einer vorbestimmten Frequenz f1 handelt. Sofern dies nicht der Fall ist, liegt ein Fehler vor, und es wird ein Fehlermodus eingegangen oder, wie in der Fig. 3 der Einfachheit halber dargestellt, wieder beim nächsten Signal zum Schritt S12 übergegangen.

Sofern aber in Schritt S16 ein pulsbreitenmoduliertes Signal erkannt ist, wird gemäß Schritt S18 der Zustand des Aktors 10 gewechselt. Nunmehr gilt die Einteilung gemäß Fig. 5: Für Werte von t₁/T zwischen 0% und 5% wird nunmehr gerade nicht die Endstellung s₁ eingenommen, sondern ein Fehler angenommen. Für Werte zwischen 5% und 10% wird die Endstellung s₁ eingenommen, für Werte zwischen 90% und 95% die Endstellung s₂, und für Werte über 95% wird ein Fehler angenommen. Durch pulsbreitenmodulierte Signale mit einem Verhältnis von t₁/T von zwischen 10% und 90% werden unterschiedliche Zwischenstellungen angegeben.

Nun wird beim nächsten Signal abermals geprüft, ob es sich um ein pulsbreitenmoduliertes Signal der Frequenz f1 handelt, siehe Schritt S20. Sofern dies der Fall ist, wird diesmal das Signal gemäß der Einteilung aus Fig. 5 in Schritt S22 umgesetzt, also die entsprechende Stellung aktiv eingenommen oder beibehalten. Dann wird das nächste Signal abgewartet und für dieses der Schritt S20 abermals durchgeführt. Sofern kein pulsbreitenmoduliertes Signal der Frequenz f1 ermittelt wird, wird geprüft, ob das Signal eine digitale Null oder eine digitale Eins ist, siehe Schritt S24. Falls dies der Fall ist, wird ein Fehlermodus gemäß Schritt S26 eingenommen, denn bei Ansteuerung mit pulsbreitenmodulierten Signale dürfen die Signale nicht vollständig digital sein, siehe die Einteilung in Fig. 5. Falls das Signal weder ein pulsbreitenmoduliertes Signal mit der Frequenz f1 ist, noch ein rein digitales Signal, wird in Schritt S28 überprüft, ob es ein pulsbreitenmoduliertes Signal mit einer anderen Frequenz f2 ist. Sofern dies auch nicht der Fall ist, wird in Schritt S30 ebenfalls ein Fehlermodus eingenommen. Sofern dies aber der Fall ist, wird, gegebenenfalls nach Überprüfung, ob eine bestimmte Sequenz der Signale gegeben ist, in Schritt S32 wieder in den Grundzustand zurückgewechselt und nunmehr wiederum gemäß Schritt S12 beim nächsten Signal auf digitale Signale geprüft.

Das anhand von Fig. 3 erläuterte Verfahren erlaubt es, den Aktor 10 in ein Kraftfahrzeug einzubauen, ohne dass vorab festgelegt werden müsste, ob der Aktor 10 digital oder per Pulsbreitenmodulation gesteuert wird. Durch den Schritt S28 und S32 wird es sogar ermöglicht, die Ansteuerung zu ändern, z.B. den Aktor aus einem Fahrzeug auszubauen und in ein anderes wieder einzubauen.

In einer einfacheren Ausführungsform wird mit dem Grundzustand in Schritt S10 begonnen und es erfolgt ein Einbau in ein Kraftfahrzeug, in dem alle Signale digital sind, sodass lediglich die Schritte S12 und S14 wechselnd durchlaufen werden. Alternativ wird der Aktor 10 in ein Kraftfahrzeug mit Pulsbreitenmodulation eingebaut, und es werden die Schritte S12, S16, S18 und S20, S22 durchlaufen, und dann wechseln die Schritte S20 und S22. Insbesondere ist es bei der einfachen Ausführungsform des Aktors 10 nicht notwendig, dass dieser in den Grundzustand zurückwechseln können muss.

Alternativ kann auch der Zustand, in dem mit pulsbreitenmodulierten Signalen gerechnet wird, als Grundzustand angenommen werden, und in diesem Falle würde mit Schritt S18 begonnen und gegebenenfalls über Schritt S32 zur digitalen Ansteuerung übergegangen. In diesem Falle wäre der Schritt S16 optional, weil damit zu rechnen ist, dass nach einmaligem Einbau dann alle Signale entweder immer pulsbreitenmoduliert oder immer rein digital sind.

## Patentansprüche

1. Vorrichtung (10) zum Bewegen eines mechanischen Elements (12), mit einem Eingang (14) zum Empfangen von Signalen und einer Steuereinrichtung (16) zum Auslesen empfangener Signale und zum Bewirken einer Bewegung des mechanischen Elements (12) in Abhängigkeit von einem ausgelesenen Signal, wobei die Steuereinrichtung (16) dazu ausgelegt ist, in einem ersten Modus empfangene Signale hinsichtlich einer digitalen Information auszuwerten und in Abhängigkeit von einem empfangenen Signal das Einnehmen einer von zwei Endstellungen (s₁, s₂) des mechanischen Elements (12) zu bewirken und in einem zweiten Modus empfangene Signale als auf einer vorbestimmten Frequenz pulsbreitenmoduliert auszuwerten und in Abhängigkeit von einem empfangenen Signal das Einnehmen einer Stellung aus einer Mehrzahl von Stellungen zu bewirken, die eine Zwischenstellung zwischen den Endstellungen (s₁, s₂) sowie die beiden Endstellungen (s₁, s₂) umfasst
**dadurch gekennzeichnet, dass**
in dem ersten Modus als Signal zum Einnehmen der Endstellung (s₁, s₂₎ interpretierte Signale im zweiten Modus als Fehlersignale interpretiert werden.

2. Vorrichtung (10) nach Anspruch 1,
**dadurch gekennzeichnet, dass**
die Steuereinrichtung (16) dazu ausgelegt ist, von zumindest einem jeweiligen Modus bei Empfang eines Signals jeweils vorbestimmter Art in den anderen Modus zu wechseln.

3. Verfahren zum Bauen von Kraftfahrzeugen mit unterschiedlicher Art von Steuerung von Aktorenvorrichtungen (10), wobei eine Aktorenvorrichtung (10) zum Bewegen eines mechanischen Elements (12), mit einem Eingang (14) zum Empfangen von Signalen und einer Steuereinrichtung (16) zum Auslesen empfangener Signale und zum Bewirken einer Bewegung des mechanischen Elements (12) in Abhängigkeit von einem ausgelesenen Signal, eingebaut wird, die sowohl über digital interpretierbare Signale als auch pulsbreitenmodulierte Signale ansteuerbar ist und bei Ansteuerung gemäß einer dieser beiden Arten selbige Art erkennt, um die Signale auszuwerten, wobei die Steuereinrichtung (16) dazu ausgelegt ist, in einem ersten Modus empfangene Signale hinsichtlich einer digitalen Information auszuwerten und in Abhängigkeit von einem empfangenen Signal das Einnehmen einer von zwei Endstellungen (s₁, s₂) des mechanischen Elements (12) zu bewirken und in einem zweiten Modus empfangene Signale als auf einer vorbestimmten Frequenz pulsbreitenmoduliert auszuwerten und in Abhängigkeit von einem empfangenen Signal das Einnehmen einer Stellung aus einer Mehrzahl von Stellungen zu bewirken, die eine Zwischenstellung zwischen den Endstellungen (s₁, s₂) sowie die beiden Endstellungen (s₁, s₂) umfasst,
**dadurch gekennzeichnet, dass**
in dem ersten Modus als Signal zum Einnehmen der Endstellung (s₁, s₂) interpretierte Signale im zweiten Modus als Fehlersignale interpretiert werden.

## Claims

1. Device (10) for moving a mechanical element (12), with an input (14) for receiving signals and a control device (16) for reading received signals and for initiating a movement of the mechanical element (12) as a function of a read signal, wherein the control device (16) is configured in a first mode to evaluate received signals with regard to digital information and as a function of a received signal to initiate the adoption of one of two end positions (s₁, s₂) of the mechanical element (12) and in a second mode to evaluate received signals as pulse-width modulated at a predetermined frequency and as a function of a received signal to initiate the adoption of one position from a plurality of positions which includes an intermediate position between the end positions (s₁, s₂) and the two end positions (s₁, s₂),
**characterised in that**
in the first mode signals interpreted as a signal for adopting the end position (s₁, s₂) are interpreted in a second mode as error signals.

2. Device (10) according to claim 1,
**characterised in that**
the control device (16) is designed to change from at least one respective mode into the other mode on receiving a signal of a predetermined type.

3. Method for constructing motor vehicles with different types of control for actuator devices (10), wherein one actuator device (10) is installed for moving a mechanical element (12), with an input (14) for receiving signals and a control device (16) for reading received signals and for initiating a movement of the mechanical element (12) as a function of a read signal, which can be controlled by both digitally interpretable signals and pulse-width modulated signals and on activation according to one of these two types identifies the same type in order to evaluate the signals, wherein the control device (16) is designed in a first mode to evaluate received signals with regard to digital information and as a function of a received signal to initiate the adoption of one of two end positions (s₁, s₂) of the mechanical element (12) and in a second mode to evaluate received signals as pulse-width modulated at a predetermined frequency and as a function of a received signal to initiate the adoption of one position from a plurality of positions which includes an intermediate position between the end positions (s₁, s₂) and the two end positions (s₁, s₂),
**characterised in that**
in the first mode signals interpreted as a signal for adopting the end position (s₁, s₂) are interpreted in a second mode as error signals.

## Revendications

1. Dispositif (10) servant à déplacer un élément (12) mécanique, avec une entrée (14) servant à recevoir des signaux et un système de commande (16) servant à lire des signaux reçus et servant à entraîner un déplacement de l'élément mécanique (12) en fonction d'un signal lu, dans lequel le système de commande (16) est configuré pour évaluer des signaux reçus dans un premier mode eu égard à une information numérique et pour entraîner, en fonction d'un signal reçu, l'adoption d'une parmi deux positions de fin de course (s₁, s₂) de l'élément mécanique (12) et pour évaluer des signaux reçus dans un deuxième mode tels que des signaux modulés en largeur d'impulsion à une fréquence prédéfinie et pour entraîner, en fonction d'un signal reçu, l'adoption d'une position parmi une multitude de positions, laquelle comprend une position intermédiaire entre les positions de fin de course (s₁, s₂) ainsi que les deux positions de fin de course (s₁, s₂),
**caractérisé en ce que**
des signaux interprétés dans le premier mode comme étant des signaux servant à l'adoption de la position de fin de course (s₁, s₂) sont interprétés dans le deuxième mode en tant que signaux erronés.

2. Dispositif (10) selon la revendication 1,
**caractérisé en ce que**
le système de commande (16) est configuré pour passer d'au moins un mode respectif lors de la réception d'un signal d'un type respectivement prédéfini dans l'autre mode.

3. Procédé servant à construire des véhicules automobiles à commande de type différent de dispositifs actionneurs (10), dans lequel un dispositif actionneur (10) servant à déplacer un élément (12) mécanique est monté avec une entrée (14) servant à recevoir des signaux et avec un système de commande (16) servant à lire des signaux reçus et servant à entraîner un déplacement de l'élément (12) mécanique en fonction d'un signal lu, lequel peut être piloté à la fois par l'intermédiaire de signaux pouvant être interprétés numériquement et de signaux modulés en largeur d'impulsion et qui, dans le cas d'un pilotage selon un desdits deux types identifie ledit type afin d'évaluer les signaux, dans lequel le système de commande (16) est configuré pour analyser des signaux reçus dans un premier mode eu égard à une information numérique et pour entraîner, en fonction d'un signal reçu, l'adoption d'une parmi deux positions de fin de course (s₁, s₂) de l'élément (12) mécanique et pour analyser des signaux reçus dans un deuxième mode tels que des signaux modulés en largeur d'impulsion à une fréquence prédéfinie et pour entraîner, en fonction d'un signal reçu, l'adoption d'une position parmi une pluralité de positions, laquelle comprend une position intermédiaire entre les positions de fin de course (s₁, s₂) ainsi que les deux positions de fin de course (s₁, s₂),
**caractérisé en ce que**
des signaux interprétés dans le premier mode comme étant des signaux servant à l'adoption de la position de fin de course (s₁, s₂) sont interprétés dans le deuxième mode en tant que signaux erronés.
